# EUROPEAN PATENT SPECIFICATION

(11) **EP 4 422 868 B1**
(45) Date of publication and mention of the grant of the patent: **08.07.2026**
(21) Application number: 22800802.5
(22) Date of filing: 24.10.2022
(51) Int. Cl.: B41F 19/00, B25J 5/02, B25J 11/00, B25J 15/06, B25J 9/00, B65H 5/22, B65H 3/08

(54) **A METHOD AND AN APPARATUS FOR PROCESSING OF PRINTABLE PANELS**
VERFAHREN UND VORRICHTUNG ZUR VERARBEITUNG VON BEDRUCKBAREN PLATTEN
PROCÉDÉ ET APPAREIL DE TRAITEMENT DE PANNEAUX IMPRIMABLES

(30) Priority: 27.10.2021 IT 202100027578
(43) Date of publication of application: 04.09.2024
(73) Proprietor: Tic Tac Srl, 36016 Thiene VI (IT)
(72) Inventor: MIOTTO, Giancarlo, 36016 Thiene VI (IT)
(74) Representative: Pozzato, Matteo
(86) International application number: PCT/IB2022/060184
(87) International publication number: WO 2023/073523

(56) References cited:
- EP-A1- 1 395 401
- EP-A1- 3 647 004
- US-A1- 2020 339 360

## Description

### TECHNICAL FIELD

This invention relates to a method and an apparatus for processing printable panels and, especially, for obtaining a greater productivity and automation in the production of printed and cut panels.

### BACKGROUND ART

Currently, in the field of processing printable panels, the problem is known of arranging printable panels in such a way that they are correctly fed to a printing apparatus, particularly in such a way that this interacts with one of the faces of the panel suitably prepared to be printed, that is to say, which has a finish and/or surface treatment suitable for receiving the printing pigments/inks and for determining the desired surface finish for this face, once printed, for example in terms of yield and chromatic hold.

Likewise, where a printed panel is to be cut according to a specific shape, for example by punching, the problem of arranging the panel to be cut so that it is fed correctly into a cutting machine is known.

Currently, according to the prior art, the arrangement of the panels to be printed and/or cut is carried out manually with the consequence of obtaining a productivity limited by the work rate of the operator in charge of positioning the panels as well as by the natural non-homogeneous nature of the execution characteristic of the activities carried out manually.

Prior art apparatus are described, for example, in documents US2020/339360A1, EP1395401A1, EP3647004A1.

### SUMMARY OF THE INVENTION

The problem underlying the invention is therefore that of improving the productivity of processing printable panels, particularly by making the positioning of said panels faster, temporally uniform and spatially homogeneous, during their processing.

The task of a method and an apparatus for processing printable panels according to the invention is therefore to solve this problem.

Within this aim, an object of the invention is to provide a method and an apparatus for processing printable panels which can have an increased productivity with respect to traditional apparatuses and methods.

Within this aim, an object of the invention is to provide a method and an apparatus for processing printable panels which can be easily implemented with known and reliable production technologies.

Another object of the invention is to provide a method and an apparatus for processing printable panels which allows a quick manipulation of the panels being processed.

Another object of the invention is to provide a method and an apparatus for processing printable panels which allows a precise and uniform feeding of the panels for the printing and/or cutting of the latter.

This task, as well as these and other purposes which will appear more clearly below, are achieved by a method and an apparatus for processing printable panels according to the attached independent claims.

Detailed features of a method and an apparatus for processing printable panels according to the invention are indicated in the dependent claims.

Further features and advantages of the invention will emerge more fully from the description of a preferred but not exclusive embodiment of a method and an apparatus for processing printable panels according to the invention, illustrated by way of non-limiting example in the accompanying drawings listed below.

### BRIEF DESCRIPTION OF THE DRAWINGS

- Figure 1 is a diagram of an apparatus for processing printable panels according to an embodiment of the invention;
- Figure 2 illustrates a detail of an apparatus for processing printable panels, according to an embodiment of the invention, where some parts are not shown in order to better highlight others.

### DETAILED DESCRIPTION

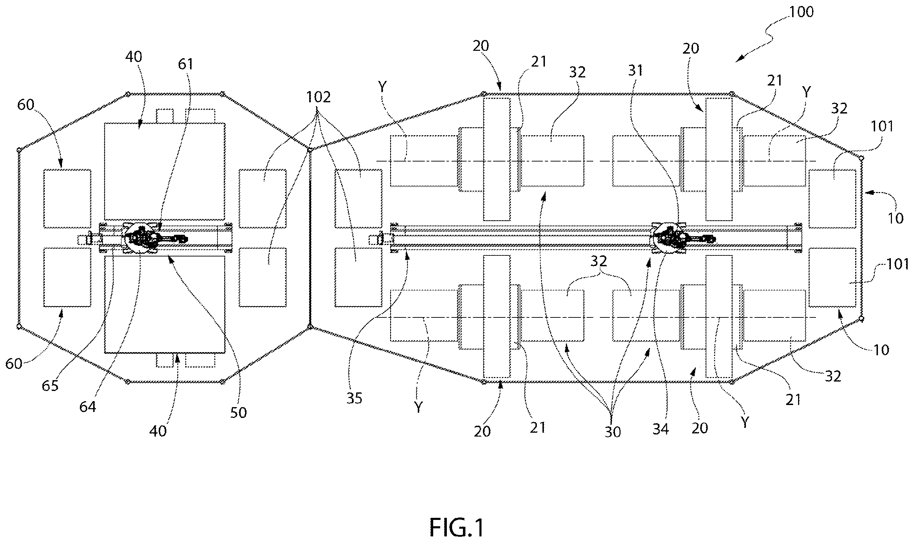

With particular reference to Figure 1, the reference numeral 100 denotes in its entirety an apparatus for processing printable panels and specifically an apparatus 100 for printing and if necessary cutting panels typically made of cellulosic material or plastic material for making cardboard structures or billboards.

This apparatus 100 comprises:
- at least one feeding station 10 which is configured to house a stack of panels 101 to be processed which are provided with a printable face 101a and a rear face 101b;
- at least one printing station 20 suitable for printing an image on the printable face 101a of a panel 101 to be processed and provided with a feeding device 21 configured to move a printable panel 101 through the printing station 20;
- at least one transfer station 30 comprising at least a first manipulator 31 and at least one support table 32 which faces the feeding station 10, to feed into the latter panels 101 to be processed.

Reference in particular to Figure 1 shows, by way of non-limiting example, an apparatus 100 which has four printing stations 20 and a transfer station 30 which comprises a single first manipulator 31 configured to feed panels 101 from two feeding stations 10 to four support tables 32, each facing one of the corresponding feeding stations.

In general, according to particularly advantageous embodiments of the invention, each transfer station 30 can consist of a single first manipulator 31 and a plurality of support tables 32 to obtain a high simplicity of the apparatus 100.

According to this solution, in fact, the single first manipulator 31 can feed each support table 32 in succession in a so-called masked time mode, that is to say, the first manipulator 31 can feed a panel 101 to a printing station 20 while the other printing stations 20 are printing the relative panels previously fed by the same first manipulator 31 in succession.

According to the invention, the first manipulator 31 is configured to automatically perform in sequence:
- a gripping operation which provides for the grasping, by the first manipulator 31, of a first panel 101 from a stack of panels 101 which is housed in the feeding station 10,
- a displacement operation which involves moving the first panel 101 from the feeding station to the support table 32,
- a deposition operation which provides for depositing the first panel 101 on the support table 32, so that the first panel 101 interferes with the feeding device 21 of the printing station 20 and which has the printable face 101a of the panel 101 oriented in such a way that an image can be printed on it by the printing station 20.

The first manipulator 31 in particular can comprise a robotic arm 33 which can be mounted on a slide 34 which in turn can be coupled in a sliding manner to a guide 35, for example with rails, configured to define a movement trajectory for the robotic arm 33 which flanks the support tables 32 to allow the robotic arm 33 to load each of the latter with a panel 101.

The robotic arm 33, for example, can be a 5-axis arm.

The first manipulator 31 can comprise gripping members 36 suitable for coupling with a face of a panel 101 to be processed, preferably by pneumatic action, to transfer the latter from the feeding station 10 to the support table 32. The first manipulator 31 in particular can be configured to overturn a gripped panel 101, in the transfer of the latter between the feeding station 10 and the support table 32.

The support table 32 can have an upper surface A which is aligned with the feeding device 21 of the printing station 20 or in direct or indirect connection with the latter, for example by means of a conveyor belt or other transfer means.

The support table 32 can also have through openings B suitable for being engaged by the gripping members 36 to carry out the deposition operation in such a way that a face of a panel 101 to be processed coupled with the gripping members 36 can be supported on the upper surface A so that, following the coupling of the gripping members 36 with a rear face 101b of the panel 101, the printable face 101a of the latter is exposed at the top, once deposited on the support table 32, to be printed in the printing station 20.

The gripping members 36 can be configured to adhere by pneumatic action to a face of a panel 101 to be processed and extend from a frame 37 of the first manipulator 31.

The latter can be configured to position the frame 37 under the support table 32 with the gripping members 36 which pass through the openings B of the latter to let a panel 101 coupled to the gripping members 36 face the upper surface A, so as to expose the printable face 101a upwards without interfering with the latter during the movement of the panel 101.

The gripping members 36 can for example comprise a rod 361 which extends from the frame 37 between an end fixed to the latter and an end equipped with a suction cup element 362 which is placed in fluid communication, for example through the rod 361, with a pneumatic device, not illustrated, designed to depressurize and pressurize, on command, the suction cup element 362 to promote its adhesion to a panel 101, or to promote its detachment, respectively. The frame and/or the rods 362 and/or the support table 32 are configured and dimensioned in such a way that the manipulator 31 can easily position a panel 101 on the upper surface A by inserting the rods 361 of the gripping members 36 into the openings B following a movement under the support table 32 of frame 37.

The length of the rods 362 and the thickness of the support table 32 can therefore be selected in such a way that the manipulator 31 can easily position a panel 101 above the support table 32 with the frame 37 which supports the panel 101 from below by means of the gripping members 36 which have rods 362 passing through the openings B.

The openings B can extend in a transversal direction X of the support table 32, to allow the insertion of the gripping members 36 in them along the transversal direction X, so that a panel 101 coupled with the gripping members 36 faces the upper surface A of the support table 32.

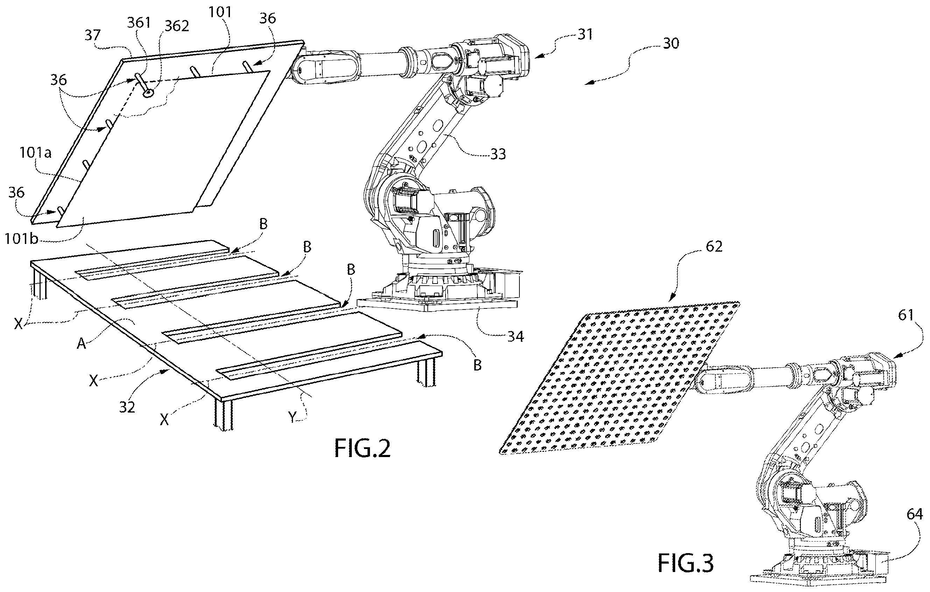

The feeding device 21 can define a feed path Y, for example straight, and the transversal direction X can be incident with this feed path Y and in particular can be perpendicular to the latter, for example as shown in Figure 2.

It should be noted that in the diagram of Figure 1 the openings B are not shown exclusively to improve the understanding of the drawing, referring however to Figure 2 for the visual representation of a possible non-limiting embodiment of the same.

According to the contingent requirements of implementation of the invention, the transversal direction X can clearly be incident with the feed trajectory Y according to angles different from 90°, for example equal to 75° or 60°. Optionally, the transversal direction X of the openings B may also be parallel to the feed path Y.

Advantageously, an operating direction along which the manipulator 31 is mobile, for example defined by the guide 35, can extend parallel or predominantly parallel to the feed path Y to obtain a high compactness of the apparatus 100.

This operating direction could, otherwise, be substantially perpendicular or transversal to the feed trajectory Y.

In this case, it is possible to reduce the overall dimensions in width - that is to say, transversely to the feed trajectory Y, of an apparatus 100 of the type shown by way of example in Figure 1, that is to say, which has the operating direction of the manipulator 31 parallel to the feed trajectory Y.

The apparatus 100 can also comprise:
- a cutting station 40 configured to automatically cut panels 101 to be processed, for example following their printing;
- an unloading station 50 configured to house cut parts of panels 101;
- a handling station 60 comprising a second manipulator 61 configured to couple with portions of a panel 101 cut by the cutting station 40 and deposit it in the unloading station 50.

Between each printing station 20 and each cutting station 40 a transfer apparatus, not illustrated, can be provided to transfer automatically, or by means of the intervention of an operator, groups 102 of printed panels, for example stacked on a platform of the type known in jargon as a "pallet".

The second manipulator 61 comprises an adhesion member 62 configured to exert an adhesive action, preferably by pneumatic vacuum, on a surface in contact with the adhesion member 62, to couple parts of a panel 101, cut by the cutting station 40, to the adhesion member 62 and move them by means of the latter.

The adhesion member 62 comprises a foam layer, not illustrated, connected to a vacuum device able to generate a pneumatic vacuum diffused on an operative surface of the foam layer, in a *per se* known manner and not further described or illustrated.

The adhesion member 62 can be configured to preserve a finish of a printed face with which, in operation, interacts to hold the panel 101 and move it.

In other words, the second manipulator 61 is configured to be able to handle pieces of panel of any shape, thanks to the diffuse effect of pneumatic vacuum obtained thanks to the shape of the adhesion member 62, which is configured and made so that its interference with the printed printable face 101a does not cause damage during the action of the second manipulator 61.

The second manipulator 61 can be made in a similar manner to the first manipulator 31, for example with a same robotic arm, for example mounted on a slide 64 movable along a guide 65, for example a rail.

The apparatus 100 can comprise a control device, for example an industrial controller, for example a PLC, which controls the stations 10, 20, 30, 40, 50 and 60 to coordinate their reciprocal action so as to automate, partially or completely, a method for obtaining panels 101 which are printed and possibly also cut.

The invention also relates to a method for processing printable panels which provides for the actuation of the following steps by means of the apparatus 100:
- an automated gripping operation which provides for the grasping, by the first manipulator 31, of a first panel 101 from a stack of panels 101 which is housed in the feeding station 10,
- an automated displacement operation which provides for the first panel 101 to be moved onto said support table 32, while overturning it,
- an automated deposition operation, which provides for depositing the gripped panel 101 on the support table 32 so that the latter interferes with the feeding device 21 of the printing station 20.

The displacement operation and the deposition operation are carried out in such a way that a panel 101, deposited on the support table 32 has the printable face 101a oriented in such a way that an image can be printed on it by the printing station 20.

The displacement operation can provide for an insertion of the gripping members 36 of the first manipulator 31 into the openings B of said support table 32 to deposit, in said deposition operation, a panel 101 on said support table 32, overturned with respect to the position of the latter in the feeding station 10. This method can also comprise:
- a cutting operation of a printed panel 101, so as to form a portion of the panel 101 provided with a predefined shape, even irregular, carried out for example by the cutting station 40;
- a handling operation, carried out by means of the second manipulator 61, which provides for a grip for coupling the second manipulator 61 with the portion of the panel 101 and a movement of the latter to an unloading station 50 where to stack portions of the panel 101 each obtained from the cutting operation.

It can therefore be understood how the invention achieves the intended aim and objects by improving the productivity of processing printable panels, particularly by making the positioning of said panels faster, temporally uniform and spatially homogeneous, during their processing.

In fact, the panels can be overturned quickly and accurately by the first manipulator 31 to be positioned on the support table 32 and then printed on their printable face 101a, without interfering with the latter and therefore preserving the quality of the latter.

A method and an apparatus for processing printable panels according to the invention clearly has an increased productivity with respect to traditional apparatuses and methods as it allows an automatic feeding of the printing stations to be implemented by means of the automated transfer stations which allow each panel to be printed to be oriented and positioned in a fast and optimal manner thanks to the particular structure of the transfer stations themselves.

Also, thanks to the movement structures, printed and cut panels can be handled quickly and safely, regardless of their shape obtained by the cut.

A method and an apparatus for processing printable panels according to the invention can be easily achievable with known and reliable production technologies.

Furthermore, a method and an apparatus for processing printable panels according to the invention allows, particularly by means of the transfer stations and/or the movement stations, a fast handling of the panels being processed or of parts cut out from them.

## Claims

1. Apparatus (100) for processing printable panels which includes:
- at least one feeding station (10) configured to house a stack of panels (101) to be processed having a printable face (101a) and a rear face (101b);
- at least one printing station (20) adapted to print an image on the printable face (101a) of a panel (101) to be processed and provided with a feeding device (21) configured to move a printable panel (101) through said printing station (20);
**characterized in that** the apparatus further includes:
- at least one transfer station (30) comprising at least a first manipulator (31) and at least one support table (32) which faces said feeding station (10), to feed to said support table (32) panels (101) to be processed,
wherein said first manipulator (31) is configured to automatically perform in sequence:
- a gripping operation that provides for the grasping, by said first manipulator (31), of a first panel (101) of said stack of panels housed in said feeding station (10),
- a displacement operation which involves moving the first panel (101) from the feeding station to
said support table (32),
- a deposition operation which provides for depositing the first panel (101) on said support table (32), so that said first panel (101) interferes with the feeding device (21) of said printing station (20) and which has the printable face (101a) of said panel (101) oriented in such a way that an image can be printed on it by said printing station (20).

2. Apparatus (100) according to claim 1 wherein said first manipulator (31) comprises gripping members (36) configured for coupling with a face of a panel (101) to be processed, preferably by pneumatic action, to transfer the latter from said feeding station (10) to said support table (32); said first manipulator (31) being configured to overturn a gripped panel (101) during transfer of the latter between said feeding station (10) and said support table (32);
wherein said support table (32) has an upper surface (A) aligned with the feeding device (21) of said printing station (20); said support table (32) also having through openings (B) configured to be engaged by said gripping members (36) to carry out said deposition operation in such a way that one face of a panel (101) to be processed, which is coupled with said gripping members (36) can be supported on said upper surface (A) so that following the coupling of said gripping members (36) with a rear face (101b) of said panel (101), the printable face (101a) of the latter is exposed at the top once deposited on said support table (32) by said manipulator, to be processed by said printing station (20).

3. Apparatus (100) according to claim 2 wherein said gripping members (36) are configured to adhere by pneumatic action to a face of a panel (101) to be processed and extend from a frame (37) of said first manipulator ( 31), the latter being configured to position said frame (37) under said support table (32) with said gripping members (36) which pass through the openings (B) of the latter to let a panel (101) coupled to said gripping members (36) face said upper surface ( A).

4. Apparatus (100) according to one of claims 2 and 3 wherein said openings (B) extend in a transversal direction (X) of said support table (32) to allow the insertion in them of said gripping members (36 ) along said transverse direction (X), so that a panel (101) coupled to said gripping members (36) faces the upper surface (A) of said support table (32).

5. Apparatus (100) according to one of the preceding claims which comprises:
- a cutting station (40) configured to cut panels (101) to be processed;
- an unloading station (50) configured to house cut parts of panels (101) to be processed;
- a handling station (60) comprising a second manipulator (61) configured to couple with portions of a panel (101) cut by said cutting station (40) and depositing it into said unloading station (50).

6. Apparatus (100) according to claim 5 wherein said second manipulator (61) comprises an adhesion member (62) configured to exert an adhesive action, preferably by pneumatic decompression, on a surface in contact with said adhesion member (62 ), to couple parts of a panel (101), cut by said cutting station (40), to said adhesion member (62) and to move them by means of the latter.

7. Apparatus (100) according to claim 6 wherein said adhesion member (62) comprises a foam layer connected to a vacuum device adapted to generate a pneumatic vacuum diffused on an operative surface of said foam layer; said adhesion member (62) being configured to preserve a finish of a printed face with which, in operation, it interacts to hold said panel (101) and move it.

8. Method for processing printable panels which involves the implementation of the following steps by means of the apparatus (100) according to one of the preceding claims:
- an automated gripping operation, which involves the grasping, by said first manipulator (31), of a first panel (101) from a stack of panels housed in said feeding station (10),
- an automated displacement operation, which provides for the first panel (101) to be moved onto said support table (32), while overturning it,
- an automated deposition operation, which provides for depositing the grasped panel (101) on said support table (32), so that said panel (101) interferes with the feeding device (21) of said printing station ( 20);
said displacement operation and said deposition operation being carried out in such a way that a panel (101) deposited on said support table (32) has the printable face (101a) thereof oriented so that an image can be printed thereon by said printing station (20).

9. Method for processing according to claim 8, implemented by the apparatus (100) according to claim 2, wherein said displacement operation provides for the insertion of the gripping members (36) of said manipulator in the openings ( B) of said support table (32) to deposit, in said deposition operation, a panel (101) on said support table (32), overturned with respect to the position of the latter in the feeding station (10).

10. Method for processing according to claim 8 or 9, implemented by means of the apparatus (100) according to one of claims 5-7, which comprises:
- a cutting operation of a printed panel (101), so as to form a portion of the panel (101) with a predefined shape, even irregular;
- a handling operation, carried out by means of a second manipulator (61) according to one of claims 5-7, which provides for a grip for coupling said second manipulator (61) with said portion of the panel (101) and its displacement to an unloading station (50) where to stack portions of panel (101) each obtained from said cutting operation.

## Patentansprüche

1. Einrichtung (100) zum Bearbeiten bedruckbarer Platten, die einschließt:
- mindestens eine Zuführstation (10), die konfiguriert ist, um einen Stapel von zu bearbeitenden Platten (101) aufzunehmen, die eine bedruckbare Fläche (101a) und eine hintere Fläche (101b) aufweisen;
- mindestens eine Druckstation (20), die angepasst ist, ein Bild auf die bedruckbare Fläche (101a) einer zu bearbeitenden Platte (101) zu drucken, und mit einer Zuführvorrichtung (21) bereitgestellt wird, die konfiguriert ist, um eine bedruckbare Platte (101) durch die Druckstation (20) zu bewegen;
**dadurch gekennzeichnet, dass** das Verfahren ferner einschließt:
- mindestens eine Übergabestation (30), die mindestens einen ersten Manipulator (31) und mindestens einen Auflagetisch (32) umfasst, der Zuführstation (10) zugewandt ist, dem Auflagetisch (32) zu bearbeitende Platten (101) zuzuführen;
wobei der erste Manipulator (31) konfiguriert ist, um automatisch nacheinander durchzuführen:
- einen Greifvorgang, der das Greifen einer ersten Platte (101) des in der Zuführstation (10) untergebrachten Plattenstapels durch den ersten Manipulator (31) vorsieht,
- einen Verschiebevorgang, der das Bewegen der ersten Platte (101) von der Zuführstation zu dem Auflagetisch (32) umfasst,
- einen Ablagevorgang, der das Ablegen der ersten Platte (101) auf dem Auflagetisch (32) vorsieht, sodass die erste Platte (101) mit der Zuführvorrichtung (21) der Druckstation (20) in Eingriff kommt, und bei dem die bedruckbare Fläche (101a) der Platte (101) derart ausgerichtet ist, dass ein Bild durch die Druckstation (20) darauf gedruckt werden kann.

2. Einrichtung (100) nach Anspruch 1, wobei der erste Manipulator (31) Greifelemente (36) umfasst, die zum Koppeln mit einer Fläche einer zu bearbeitenden Platte (101), vorzugsweise durch pneumatische Wirkung, konfiguriert sind, um letztere von der Zuführstation (10) zu dem Auflagetisch (32) zu überführen; wobei der erste Manipulator (31) konfiguriert ist, um eine gegriffene Platte (101) während der Überführung der Letzteren zwischen der Zuführstation (10) und dem Auflagetisch (32) zu wenden;
wobei der Auflagetisch (32) eine Oberseite (A) aufweist, die mit der Zuführvorrichtung (21) der Druckstation (20) ausgerichtet ist; der Auflagetisch (32) auch Durchgangsöffnungen (B) aufweist, die konfiguriert sind, um mit den Greifelementen (36) in Eingriff gebracht zu werden, um den Ablagevorgang derart auszuführen, dass eine Fläche einer zu bearbeitenden Platte (101), die mit den Greifelementen (36) gekoppelt ist, auf der Oberseite (A) gelagert werden kann, sodass nach dem Koppeln der Greifelemente (36) mit einer hintere Fläche (101b) der Platte (101) die bedruckbare Fläche (101a) der Letzteren oben freiliegt, sobald sie durch den Manipulator auf dem Auflagetisch (32) abgelegt wurde, um von der Druckstation (20) bearbeitet zu werden.

3. Einrichtung (100) nach Anspruch 2, wobei die Greifelemente (36) konfiguriert sind, um durch pneumatische Wirkung an einer Fläche einer zu bearbeitenden Platte (101) zu haften, und sich von einem Rahmen (37) des ersten Manipulators (31) erstrecken, wobei letzterer konfiguriert ist, um den Rahmen (37) unter dem Auflagetisch (32) mit den Greifelementen (36) zu positionieren, welche durch die Öffnungen (B) des letzteren hindurchtreten, eine an die Greifelemente (36) gekoppelte Platte (101) der Oberseite (A) zugewandt sein zu lassen.

4. Einrichtung (100) nach einem der Ansprüche 2 und 3, wobei sich die Öffnungen (B) in einer Querrichtung (X) des Auflagetisches (32) erstrecken, um das Einführen der Greifelemente (36) in diese entlang der Querrichtung (X) zu ermöglichen, sodass ein Paneel (101), das an die Greifelemente (36) gekoppelt ist, der Oberseite (A) des Auflagetisches (32) zugewandt ist.

5. Einrichtung (100) nach einem der vorstehenden Ansprüche, umfassend:
- eine Schneidstation (40), die konfiguriert ist, um zu bearbeitende Platten (101) zu schneiden;
- eine Entladestation (50), die konfiguriert ist, um geschnittene Teile von zu bearbeitenden Platten (101) aufzunehmen;
- eine Handhabungsstation (60), umfassend einen zweiten Manipulator (61), der konfiguriert ist, um mit Abschnitten einer durch die Schneidstation (40) geschnittenen Platte (101) zu koppeln und diese in der Entladestation (50) abzulegen.

6. Einrichtung (100) nach Anspruch 5, wobei der zweite Manipulator (61) ein Haftelement (62) umfasst, das konfiguriert ist, um eine Haftwirkung, vorzugsweise durch pneumatische Dekompression, auf eine Oberfläche in Kontakt mit dem Haftelement (62) auszuüben, um Teile einer Platte (101), die durch die Schneidstation (40) geschnitten wurden, mit dem Haftelement (62) zu koppeln und sie mittels letzterem zu bewegen.

7. Einrichtung (100) nach Anspruch 6, wobei das Haftelement (62) eine Schaumstoffschicht umfasst, die mit einer Vakuumvorrichtung verbunden ist, die konfiguriert ist, um ein pneumatisches Vakuum zu erzeugen, das auf einer Wirkoberfläche der Schaumstoffschicht verteilt wird; wobei das Haftelement (62) konfiguriert ist, um eine Oberflächenbeschaffenheit einer bedruckten Fläche zu erhalten, mit der es im Betrieb zusammenwirkt, um die Platte (101) zu halten und zu bewegen.

8. Verfahren zum Bearbeiten bedruckbarer Platten, das die Durchführung der folgenden Schritte mittels der Einrichtung (100) nach einem der vorstehenden Ansprüche umfasst:
- einen automatisierten Greifvorgang, der das Greifen einer ersten Platte (101) aus einem in der Zuführstation (10) aufgenommenen Plattenstapel durch den ersten Manipulator (31) umfasst,
- einen automatisierten Verschiebevorgang, der vorsieht, dass die erste Platte (101) auf den Auflagetisch (32) bewegt wird, während sie gewendet wird,
- einen automatisierten Ablagevorgang, der das Ablegen der gegriffenen Platten (101) auf dem Auflagetisch (32) vorsieht, sodass die Platte (101) mit der Zuführvorrichtung (21) der Druckstation (20) in Eingriff gelangt;
wobei der Verschiebevorgang und der Ablagevorgang derart ausgeführt werden, dass die bedruckbare Fläche (101a) einer auf dem Tragtisch (32) abgelegten Platte (101) so ausgerichtet ist, dass durch die Druckstation (20) ein Bild darauf gedruckt werden kann.

9. Verfahren zum Bearbeiten nach Anspruch 8, implementiert durch die Einrichtung (100) nach Anspruch 2, wobei der Verschiebevorgang das Einführen der Greifelemente (36) des Manipulators in die Öffnungen (B) des Auflagetisches (32) vorsieht, um in dem Ablagevorgang eine Platte (101) auf dem Auflagetisch (32) abzulegen, die in Bezug auf die Position der letzteren in der Zuführstation (10) gewendet ist.

10. Verfahren zum Bearbeiten nach Anspruch 8 oder 9, implementiert mittels der Einrichtung (100) nach einem der Ansprüche 5 bis 7, umfassend:
- ein Schneidvorgang einer bedruckten Platten (101), um einen Abschnitt der Platte (101) mit einer vorgegebenen Form, auch unregelmäßig, auszubilden;
- einen Handhabungsvorgang, der mittels eines zweiten Manipulators (61) nach einem der Ansprüche 5 bis 7 ausgeführt wird, welcher ein Greifen zum Koppeln des zweiten Manipulators (61) mit dem Abschnitt der Platte (101) und dessen Verschieben zu einer Entladestation (50) vorsieht, an der Abschnitte der Platte (101) zu stapeln sind, die jeweils aus dem Schneidvorgang erhalten werden.

## Revendications

1. Appareil (100) permettant de traiter des panneaux imprimables qui comporte :
- au moins un poste d'alimentation (10) conçu pour loger une pile de panneaux (101) à traiter ayant une face imprimable (101a) et une face arrière (101b) ;
- au moins un poste d'impression (20) adapté pour imprimer une image sur la face imprimable (101a) d'un panneau (101) à traiter et pourvu d'un dispositif d'alimentation (21) conçu pour acheminer un panneau imprimable (101) à travers ledit poste d'impression (20) ;
**caractérisé en ce que** l'appareil comporte en outre :
- au moins un poste de transfert (30) comprenant au moins un premier manipulateur (31) et au moins une table de support (32) qui fait face vers ledit poste d'alimentation (10), pour alimenter à ladite table de support (32) des panneaux (101) à traiter ;
dans lequel ledit premier manipulateur (31) est conçu pour mettre en œuvre automatiquement en séquence :
- une opération de préhension qui assure la saisie, par ledit premier manipulateur (31), d'un premier panneau (101) de ladite pile de panneaux logée dans ledit poste d'alimentation (10),
- une opération de déplacement qui implique l'acheminement du premier panneau (101) du poste d'alimentation à ladite table de support (32),
- une opération de dépôt qui assure le dépôt du premier panneau (101) sur ladite table de support (32), de sorte que ledit premier panneau (101) interfère avec le dispositif d'alimentation (21) dudit poste d'impression (20) et qui a la face imprimable (101a) dudit panneau (101) orientée d'une manière telle qu'une image peut être imprimée sur celle-ci par ledit poste d'impression (20).

2. Appareil (100) selon la revendication 1 dans lequel ledit premier manipulateur (31) comprend des éléments de préhension (36) conçus pour un accouplement avec une face d'un panneau (101) à traiter, de préférence par une action pneumatique, pour transférer ce dernier dudit poste d'alimentation (10) à ladite table de support (32) ; ledit premier manipulateur (31) étant conçu pour retourner un panneau (101) saisi pendant le transfert de ce dernier entre ledit poste d'alimentation (10) et ladite table de support (32) ;
dans lequel ladite table de support (32) a une surface supérieure (A) alignée avec le dispositif d'alimentation (21) dudit poste d'impression (20) ; ladite table de support (32) ayant également des ouvertures traversantes (B) conçues pour être mises en prise par lesdits éléments de préhension (36) pour effectuer ladite opération de dépôt d'une manière telle qu'une face d'un panneau (101) à traiter, qui est accouplée auxdits éléments de préhension (36) peut être supportée sur ladite surface supérieure (A) de sorte qu'à la suite de l'accouplement desdits éléments de préhension (36) avec une face arrière (101b) dudit panneau (101), la face imprimable (101a) de ce dernier est exposée en haut une fois déposée sur ladite table de support (32) par ledit manipulateur, pour être traitée par ledit poste d'impression (20).

3. Appareil (100) selon la revendication 2 dans lequel lesdits éléments de préhension (36) sont conçus pour adhérer par action pneumatique à une face d'un panneau (101) à traiter et s'étendent à partir d'un cadre (37) dudit premier manipulateur (31), ce dernier étant conçu pour positionner ledit cadre (37) sous ladite table de support (32) avec lesdits éléments de préhension (36) qui passent à travers les ouvertures (B) de ce dernier pour laisser un panneau (101) accouplé auxdits éléments de préhension (36) faire face à ladite surface supérieure (A).

4. Appareil (100) selon l'une des revendications 2 et 3 dans lequel lesdites ouvertures (B) s'étendent dans une direction transversale (X) de ladite table de support (32) pour permettre l'insertion dans celles-ci desdits éléments de préhension (36) le long de ladite direction transversale (X), de sorte qu'un panneau (101) accouplé auxdits éléments de préhension (36) fait face vers la surface supérieure (A) de ladite table de support (32).

5. Appareil (100) selon l'une des revendications précédentes qui comprend :
- un poste de découpe (40) conçu pour découper des panneaux (101) à traiter ;
- un poste de déchargement (50) conçu pour loger des parties découpées de panneaux (101) à traiter ;
- un poste de manutention (60) comprenant un second manipulateur (61) conçu pour s'accoupler avec des portions d'un panneau (101) découpé par ledit poste de découpe (40) et le déposer dans ledit poste de déchargement (50).

6. Appareil (100) selon la revendication 5 dans lequel ledit second manipulateur (61) comprend un élément d'adhésion (62) conçu pour exercer une action adhésive, de préférence par décompression pneumatique, sur une surface en contact avec ledit élément d'adhésion (62), pour accoupler des parties d'un panneau (101), découpé par ledit poste de découpe (40), audit élément d'adhésion (62) et pour les acheminer au moyen de ce dernier.

7. Appareil (100) selon la revendication 6 dans lequel ledit élément d'adhésion (62) comprend une couche de mousse raccordée à un dispositif de vide adapté pour générer un vide pneumatique diffusé sur une surface fonctionnelle de ladite couche de mousse ; ledit élément d'adhésion (62) étant conçu pour préserver une finition d'une face imprimée avec laquelle, en fonctionnement, il interagit pour maintenir ledit panneau (101) et l'acheminer.

8. Procédé permettant de traiter des panneaux imprimables qui implique l'implémentation des étapes suivantes au moyen de l'appareil (100) selon l'une des revendications précédentes :
- une opération de préhension automatisée, qui implique la saisie, par ledit premier manipulateur (31), d'un premier panneau (101) provenant d'une pile de panneaux logée dans ledit poste d'alimentation (10),
- une opération de déplacement automatisée, qui assure que le premier panneau (101) soit acheminé sur ladite table de support (32), tout en le retournant,
- une opération de dépôt automatisée, qui assure le dépôt du panneau saisi (101) sur ladite table de support (32), de sorte que ledit panneau (101) interfère avec le dispositif d'alimentation (21) dudit poste d'impression (20) ;
ladite opération de déplacement et ladite opération de dépôt étant effectuées d'une manière telle qu'un panneau (101) déposé sur ladite table de support (32) a la face imprimable (101a) de celui-ci orientée de sorte qu'une image peut être imprimée sur celle-ci par ledit poste d'impression (20).

9. Procédé permettant de traiter selon la revendication 8, mis en œuvre par l'appareil (100) selon la revendication 2, dans lequel ladite opération de déplacement assure l'insertion des éléments de préhension (36) dudit manipulateur dans les ouvertures (B) de ladite table de support (32) pour déposer, dans ladite opération de dépôt, un panneau (101) sur ladite table de support (32), retourné par rapport à la position de cette dernière dans le poste d'alimentation (10).

10. Procédé permettant de traiter selon la revendication 8 ou 9, implémenté au moyen de l'appareil (100) selon l'une des revendications 5 à 7, qui comprend :
- une opération de découpe d'un panneau (101) imprimé, de façon à former une portion du panneau (101) avec une forme prédéfinie, voire irrégulière ;
- une opération de manutention, effectuée au moyen d'un second manipulateur (61) selon l'une des revendications 5 à 7, qui assure une préhension permettant d'accoupler ledit second manipulateur (61) avec ladite portion du panneau (101) et son déplacement vers un poste de déchargement (50) où l'on empile des portions de panneau (101) obtenues chacune par ladite opération de découpe.
